# EUROPEAN PATENT APPLICATION

(11) **EP 4 060 243 A1**
(43) Date of publication of application: **21.09.2022**
(21) Application number: 19952795.3
(22) Date of filing: 12.11.2019
(51) Int. Cl.: F24F 7/08

(54) **HEAT EXCHANGE TYPE VENTILATION DEVICE**

(71) Applicant: MITSUBISHI ELECTRIC CORPORATION, Chiyoda-ku Tokyo 100-8310 (JP)
(72) Inventor: YASUDA, Yuichi, Tokyo 102-0073 (JP); NAGATA, Fukutaro, Tokyo 100-8310 (JP); MATSUBARA, Yasumitsu, Tokyo 100-8310 (JP); ITO, Hiroki, Tokyo 102-0073 (JP)
(74) Representative: Witte, Weller & Partner Patentanwälte mbB
(86) International application number: PCT/JP2019/044396
(87) International publication number: WO 2021/095129

(57) **Abstract**

A heat exchange ventilator (100) includes a housing (1) having a box shape, in which a supply air passage (23) and an exhaust air passage (24) are formed, a supply fan (3) located in the supply air passage (23), an exhaust fan (4) located in the exhaust air passage (24), a heat exchanging element (2) insertably and removably disposed in the housing (1) and exchanging heat between air flowing in the supply air passage (23) and air flowing in the exhaust air passage (24), and first holders (33) and second holders (37) arranged on both sides of the heat exchanging element (2) in the housing (1) to hold the heat exchanging element (2). On at least one of the first holders (33) and the second holders (37) with the heat exchanging element (2) therebetween, convex portions that can come in contact with the heat exchanging element (2) and concave portions that are away from the heat exchanging element (2) when the convex portions are in contact with the heat exchanging element (2) are formed along an inserting and removing direction of the heat exchanging element (2).

## Description

### Field

The present invention relates to a heat exchange ventilator for ventilation while exchanging heat between air coming from outside a room and air coming from inside the room.

### Background

Heat exchange ventilators that perform ventilation while exchanging heat between air coming from outside a room and air coming from inside the room have been known. For example, Patent Literature 1 teaches a heat exchange ventilator including a box-shaped housing, a heat exchanging element that is insertably and removably located in the housing and exchanges heat between air coming from outside a room an air coming from inside the room, and a plurality of holders that are located on both sides of the heat exchanging element in the housing and holds the heat exchanging element.

When the heat exchanging element is inserted into the housing and when the heat exchanging element is removed from the housing, the heat exchanging element comes in contact with the holders. Contact faces of the holders that come in contact with the heat exchanging element are flat faces over the entire length in an inserting and removing direction of the heat exchanging element.

### Citation List

### Patent Literature

Patent Literature 1: Japanese Patent Application Laid-open No. 2009-293880

### Summary

### Technical Problem

According to the invention described in Patent Literature 1, however, because the contact faces of the holders are flat faces over the entire length in the inserting and removing direction, the heat exchanging element always comes in contact with the holders when the heat exchanging element is inserted and removed. Consequently, when the heat exchanging element is inserted and removed, the contact resistance of the heat exchanging element is large, which is disadvantageous in low work efficiency when the heat exchanging element is inserted and removed.

The present invention has been made in view of the above, and an object thereof is to provide a heat exchange ventilator capable of improving the work efficiency when a heat exchanging element is inserted and removed.

### Solution to Problem

To solve the above problems and achieve the object a heat exchange ventilator according to the present invention includes: a housing having a box shape, in which a supply air passage for supplying air from outside a room into the room and an exhaust air passage for exhausting air from inside the room to outside thereof are formed; a supply fan disposed in the supply air passage; an exhaust fan disposed in the exhaust air passage; a heat exchanging element insertably and removably disposed in the housing, the heat exchanging element exchanging heat between air flowing in the supply air passage and air flowing in the exhaust air passage; and holders arranged on both sides of the heat exchanging element in the housing, the holders holding the heat exchanging element. On at least one of the holders arranged with the heat exchanging element therebetween, along an inserting and removing direction of the heat exchanging element, convex portions capable of coming in contact with the heat exchanging element, and concave portions being away from the heat exchanging element in a state in which the convex portions are in contact with the heat exchanging element, are formed.

### Advantageous Effects of Invention

A heat exchange ventilator according to the present invention produces an effect of enabling improvement in the work efficiency when a heat exchanging element is inserted and removed.

### Brief Description of Drawings

FIG. 1 is an exploded perspective view of a heat exchange ventilator according to a first embodiment of the present invention.
FIG. 2 is a perspective view illustrating an assembly state of the heat exchange ventilator illustrated in FIG. 1, in which the heat exchange ventilator is hung and installed on a wall surface of a building.
FIG. 3 is a perspective view illustrating a state in which a control board is pulled out of a housing of the heat exchange ventilator illustrated in FIG. 2.
FIG. 4 is a perspective view illustrating a state in which filters and filter covers are removed from the heat exchange ventilator illustrated in FIG. 2.
FIG. 5 is a plan view of the heat exchange ventilator according to the first embodiment.
FIG. 6 is a bottom view of the heat exchange ventilator according to the first embodiment.
FIG. 7 is a front view of the heat exchange ventilator according to the first embodiment.
FIG. 8 is a back view of the heat exchange ventilator according to the first embodiment.
FIG. 9 is a right side view of the heat exchange ventilator according to the first embodiment.
FIG. 10 is a cross-sectional view along line X-X illustrated in FIG. 9.
FIG. 11 is a perspective view of a heat exchanging element of the heat exchange ventilator according to the first embodiment.
FIG. 12 is a cross-sectional view along line XII-XII illustrated in FIG. 6.
FIG. 13 is a cross-sectional view along line XIII-XIII illustrated in FIG. 7.
FIG. 14 is a cross-sectional view illustrating a state in which the heat exchanging element is removed from the housing illustrated in FIG. 13.
FIG. 15 is a cross-sectional view along line XV-XV illustrated in FIG. 13.
FIG. 16 is a cross-sectional view along line XVI-XVI illustrated in FIG. 13.
FIG. 17 is a perspective view illustrating the heat exchange ventilator according to the first embodiment in a state in which a top plate, a front plate, the heat exchanging element, and filters are removed.
FIG. 18 is a perspective view illustrating a state in which a first packing is disposed in the heat exchange ventilator illustrated in FIG. 17.

### Description of Embodiments

A heat exchange ventilator according to an embodiment of the present invention will be described in detail below with reference to the drawings. Note that the present invention is not limited to the embodiment.

### First Embodiment.

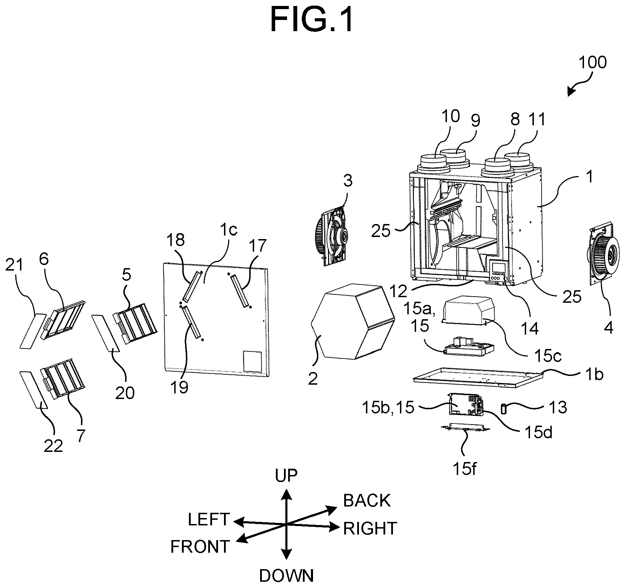

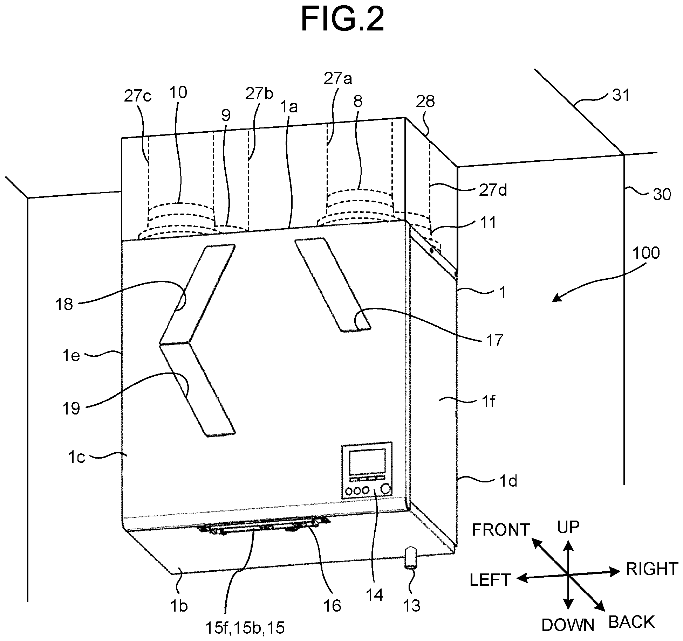

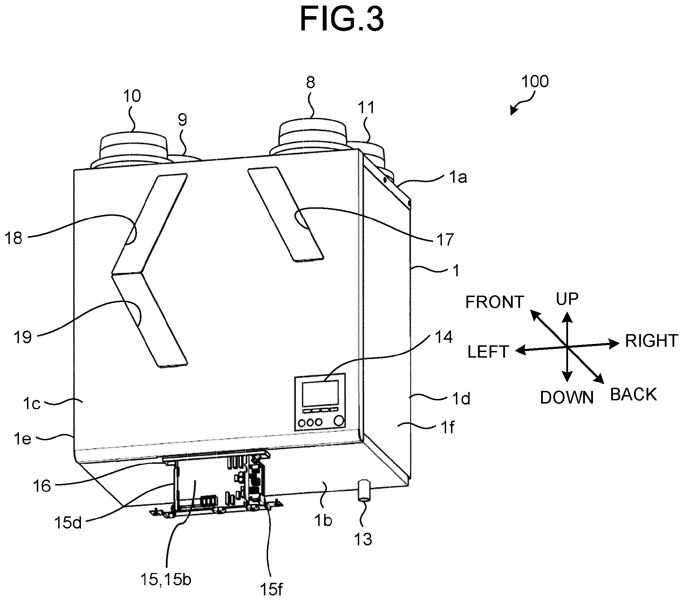

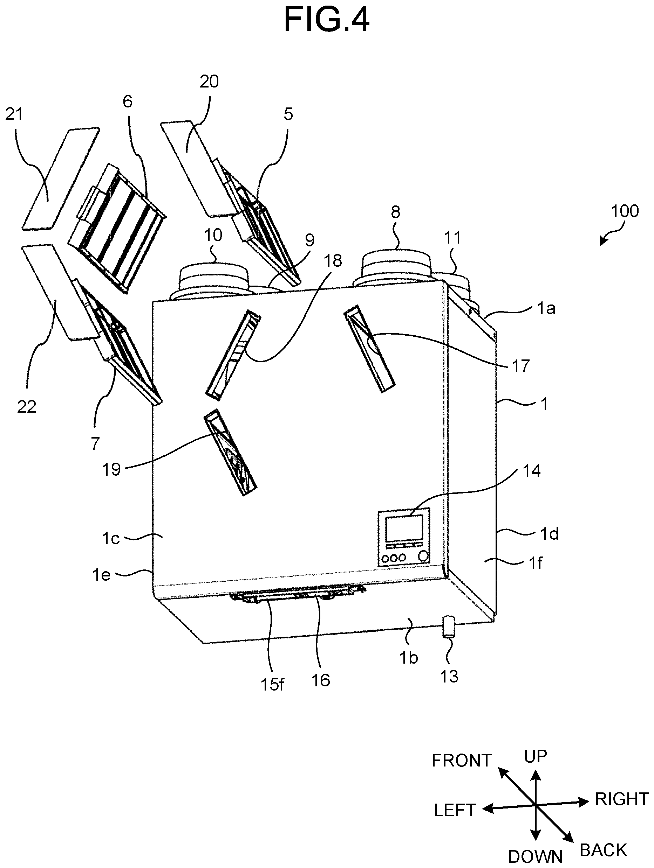

FIG. 1 is an exploded perspective view of a heat exchange ventilator 100 according to a first embodiment of the present invention. FIG. 2 is a perspective view illustrating an assembly state of the heat exchange ventilator 100 illustrated in FIG. 1, in which the heat exchange ventilator 100 is hung and installed on a wall surface 30 of a building. FIG. 3 is a perspective view illustrating a state in which a control board 15 is pulled out of a housing 1 of the heat exchange ventilator 100 illustrated in FIG. 2. FIG. 4 is a perspective view illustrating a state in which filters 5, 6, and 7 and filter covers 20, 21, and 22 are removed from the heat exchange ventilator 100 illustrated in FIG. 2. As illustrated in FIG. 1, the heat exchange ventilator 100 includes the housing 1, a heat exchanging element 2, a supply fan 3, an exhaust fan 4, an outside air filter 5, an exhaust filter 6, and a supply filter 7. The heat exchange ventilator 100 also includes an outside inlet 8, an inside inlet 9, an inside outlet 10, an outside outlet 11, a drain pan 12, a drain hole 13, an operation unit 14, and the control board 15. The heat exchange ventilator 100 is a device for ventilating a room while performing heat exchange between air from outside the room and air from inside the room. As illustrated in FIG. 2, the heat exchange ventilator 100 is installed near a ceiling surface 31 on the wall surface 30 of the building.

The housing 1 is a box-shaped member constituting an outline of the heat exchange ventilator 100. The housing 1 may have a cubic shape, but has a rectangular parallelepiped shape in the present embodiment. The housing 1 has a top plate 1a, a bottom plate 1b, a front plate 1c, a back plate 1d, a left side plate 1e, and a right side plate 1f. In the present embodiment, a plate of the housing 1 that is in contact with the wall surface 30 is the back plate 1d, and a plate thereof that is located opposite to the wall surface 30 with the back plate 1d therebetween is the front plate 1c. Note that, for explanation of directions, the normal direction of the front plate 1c will be referred to as a forward direction, the normal direction of the back plate 1d will be referred to as a backward direction, the up-down direction as viewed from a user facing the front plate 1c will be referred to as the up-down direction, and the left-right direction as viewed from the user facing the front plate 1c will be referred to as the left-right direction.

The normal line of the top plate 1a is directed upward. The top plate 1a has a rectangular shape in plan view. The outside inlet 8, the inside inlet 9, the inside outlet 10, and the outside outlet 11 are provided in the top plate 1a. The outside inlet 8 is a duct connection port for drawing air from outside the room into the housing 1. A duct 27a communicating with the outside of the room is connected to the outside inlet 8. The inside inlet 9 is a duct connection port for drawing air from outside the room into the housing 1. A duct 27b communicating with the inside of the room is connected to the inside inlet 9. The inside outlet 10 is a duct connection port for blowing air, coming from outside the room, out of the housing 1. A duct 27c communicating with the inside the room is connected to the inside outlet 10. The outside outlet 11 is a duct connection port for blowing air, coming from inside the room, out of the housing 1. A duct 27d communicating with the outside of the room is connected to the outside outlet 11. A design material 28 for hiding the outside inlet 8, the inside inlet 9, the inside outlet 10, the outside outlet 11, and the ducts 27a, 27b, 27c, and 27d is placed on the top plate 1a.

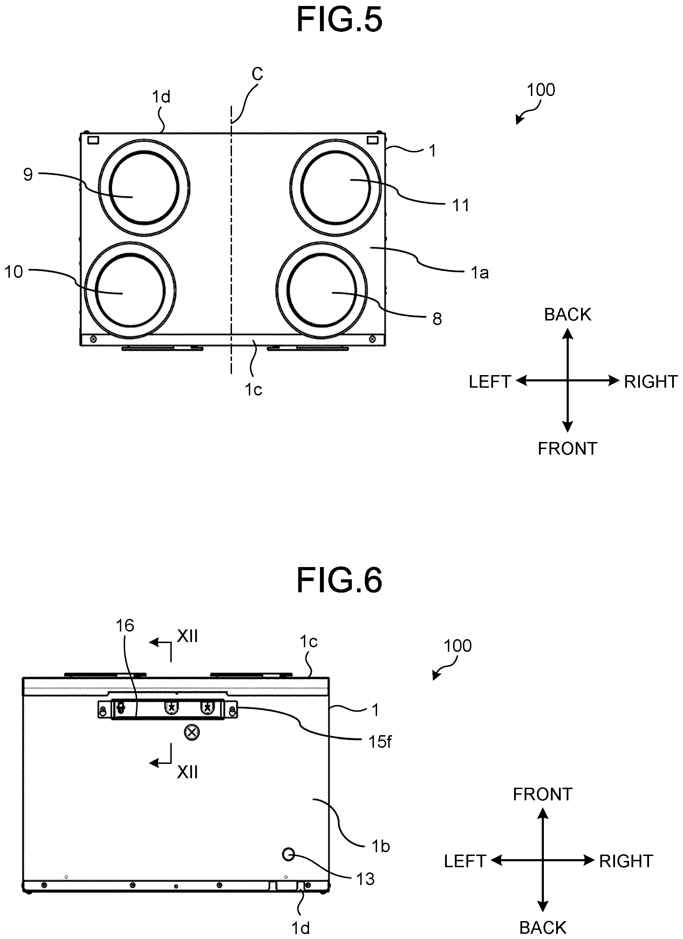

FIG. 5 is a plan view of the heat exchange ventilator 100 according to the first embodiment. Note that a line passing the center in the left-right direction of the top plate 1a and extending in a direction perpendicular to the front plate 1c and the back plate 1d will be referred to as a center line C. The inside inlet 9 and the inside outlet 10 are located on the left of the center line C. The outside inlet 8 and the outside outlet 11 are located on the right of the center line C. The outside inlet 8 is located on the front side of the outside outlet 11. The inside outlet 10 is located on the front side of the inside inlet 9. The outside inlet 8 and the inside outlet 10 are located at positions aligned in the front-back direction. The inside inlet 9 and the outside outlet 11 are located at positions aligned in the front-back direction.

FIG. 6 is a bottom view of the heat exchange ventilator 100 according to the first embodiment. The normal line of the bottom plate 1b is directed downward. The bottom plate 1b has a rectangular shape in bottom view. The bottom plate 1b is located below and away from the top plate 1a. The bottom plate 1b has a board opening 16 through which the inside of the housing 1 communicates with the outside thereof. The board opening 16 is an opening through which the control board 15 is drawn out of the housing 1 and inserted into the housing 1. The board opening 16 has a rectangular shape as viewed from below. The board opening 16 is located on the front side with respect to the center of the bottom plate 1b in the front-back direction. In the present embodiment, the board opening 16 is located on the bottom plate 1b near the boundary with the front plate 1c. The bottom plate 1b has the drain hole 13. In the present embodiment, the drain hole 13 is located near a right back corner of the bottom plate 1b.

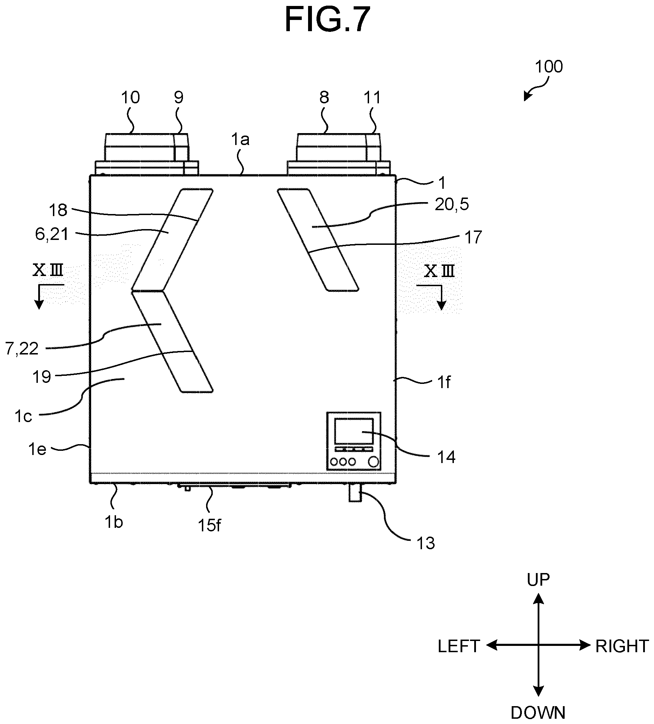

FIG. 7 is a front view of the heat exchange ventilator 100 according to the first embodiment. The normal line of the front plate 1c is directed forward, that is to the front. The front plate 1c connects between front ends of the top plate 1a and the bottom plate 1b. The front plate 1c has a rectangular shape in front view. As illustrated in FIGS. 4 and 7, the front plate 1c has an outside air filter opening 17, an exhaust filter opening 18, and a supply filter opening 19, through which the inside of the housing 1 communicates with the outside thereof.

The outside air filter opening 17 is an opening through which the outside air filter 5 is attached into and removed out of the housing 1. The outside air filter opening 17 is located on the right of the center of the front plate 1c in the left-right direction. The outside air filter opening 17 has a rectangular shape as viewed from the front. The outside air filter opening 17 is sloped in such a manner that the position thereof is closer to the right side plate 1f as it is lower. The outside air filter cover 20 can be detached to be opened. The outside air filter cover 20, in a closed state, covers the outside air filter opening 17. The operation unit 14 for such operations as starting and stopping the operation of the heat exchange ventilator 100 is provided on the front plate 1c below the outside air filter opening 17. In the present embodiment, the operation unit 14 is located near a lower right corner of the front plate 1c.

The exhaust filter opening 18 is an opening through which the exhaust filter 6 is attached into and removed out of the housing 1. The exhaust filter opening 18 is located on the left of the center of the front plate 1c in the left-right direction, and at the same height as the outside air filter opening 17. The exhaust filter opening 18 has a rectangular shape as viewed from the front. The exhaust filter opening 18 is sloped in such a manner that the position thereof is closer to the left side plate 1e as it is lower. The exhaust filter cover 21 can be detached to be opened. The exhaust filter cover 21, in a closed state, covers the exhaust filter opening 18.

The supply filter opening 19 is an opening through which the supply filter 7 is attached into and removed out of the housing 1. The supply filter opening 19 is located on the left of the center of the front plate 1c in the left-right direction, and at a position lower than the exhaust filter opening 18. The supply filter opening 19 has a rectangular shape as viewed from the front. The supply filter opening 19 is sloped in such a manner that the position thereof is closer to the right side plate 1f as it is lower. The supply filter cover 22 can be detached to be opened. The supply filter cover 22, in a closed state, covers the supply filter opening 19.

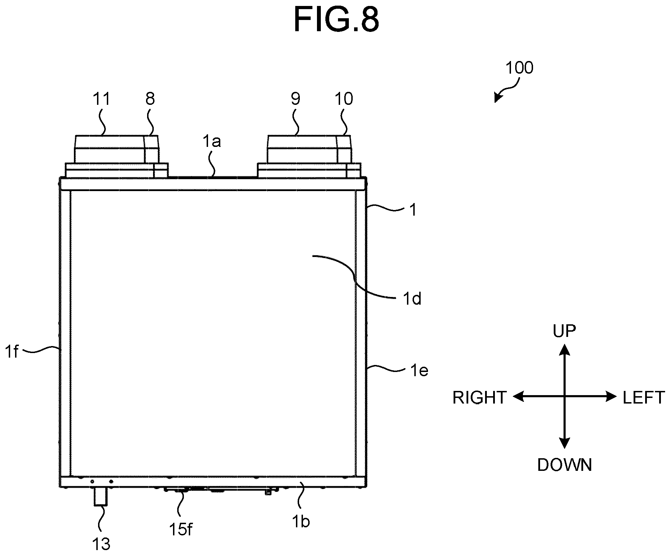

FIG. 8 is a back view of the heat exchange ventilator 100 according to the first embodiment. The normal line of the back plate 1d is directed backward. The back plate 1d connects between back ends of the top plate 1a and the bottom plate 1b. The back plate 1d has a rectangular shape in back view.

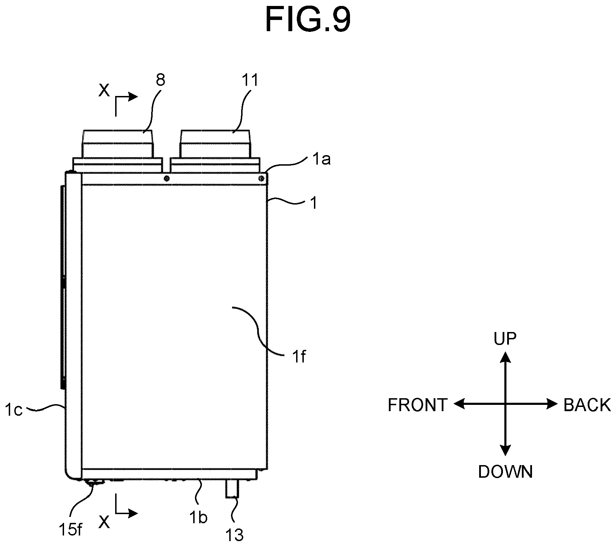

FIG. 9 is a right side view of the heat exchange ventilator 100 according to the first embodiment. The normal line of the right side plate 1f is directed rightward. The right side plate 1f connects between right ends of the top plate 1a and the bottom plate 1b. The right side plate 1f has a rectangular shape in side view. The normal line of the left side plate 1e illustrated in FIG. 8 is directed leftward. The left side plate 1e connects between left ends of the top plate 1a and the bottom plate 1b. The left side plate 1e has a rectangular shape in side view.

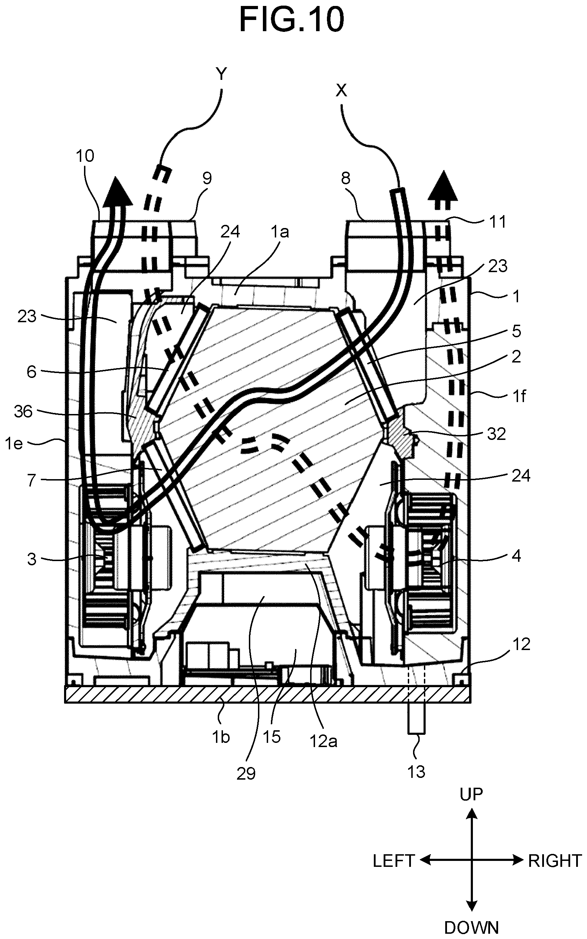

FIG. 10 is a cross-sectional view along line X-X illustrated in FIG. 9. A solid arrow X illustrated in FIG. 10 indicates the flow of air from outside to inside the room, that is, the supply air flow. A dashed arrow Y illustrated in FIG. 10 indicates the flow of air from inside to outside the room, that is, the exhaust air flow. Note that, in FIG. 10, for easier explanation, the outside inlet 8 and the inside outlet 10 are not in sectional view. A supply air passage 23 for supplying air from outside the room into the room and an exhaust air passage 24 for exhausting air from inside the room to the outside thereof are formed in the housing 1. The supply air passage 23 is an air passage for taking outside air into the housing 1 through the outside inlet 8, and supplying the air toward the inside of the room through the inside outlet 10. The exhaust air passage 24 is an air passage for taking inside air into the housing 1 through the inside inlet 9 and exhausting the air toward the outside of the room through the outside outlet 11. Hereinafter, an upstream side and a downstream side are based on the direction in which air flows through the supply air passage 23 or the exhaust air passage 24.

In the supply air passage 23, the outside air filter 5, the heat exchanging element 2, and the supply fan 3 are arranged in this order from the upstream side. A part of the supply air passage 23 is formed of a heat insulating component 25 illustrated in FIG. 1 in order to suppress occurrence of condensation.

In the exhaust air passage 24, the exhaust filter 6, the heat exchanging element 2, and the exhaust fan 4 are arranged in this order from the upstream side. A part of the exhaust air passage 24 is formed of the heat insulating component 25 illustrated in FIG. 1 in order to suppress occurrence of condensation.

The heat exchanging element 2 is a member that exchanges heat between the outside air flowing in the supply air passage 23 and the inside air flowing in the exhaust air passage 24. The heat exchanging element 2 is installed in the housing 1 between the top plate 1a and a base 12a. A space 29 for accommodating the control board 15 is formed between the base 12a and the bottom plate 1b. The heat exchanging element 2 is located in the middle of the housing 1 in the left-right direction. The heat exchanging element 2 is installed horizontally in the front-back direction and in a sloped state in the left-right direction in the present embodiment, but may be installed horizontally or in a sloped state in any direction.

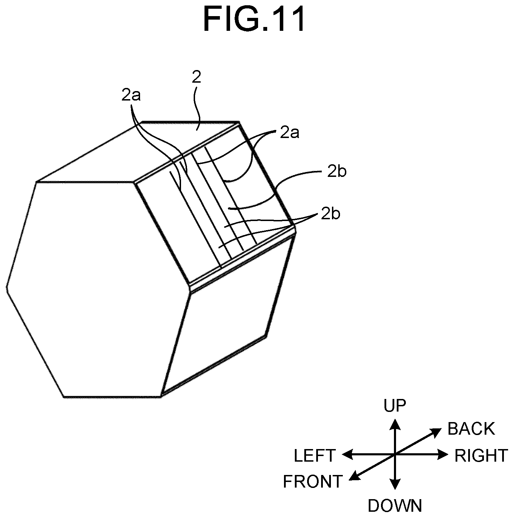

FIG. 11 is a perspective view of the heat exchanging element 2 of the heat exchange ventilator 100 according to the first embodiment. The shape of the heat exchanging element 2 may be any polygonal prism shape, which is not particularly limited, and is a hexagonal prism in the present embodiment. The heat exchanging element 2 includes a plurality of partition members 2a arranged with spaces therebetween, and a plurality of spacer members 2b for keeping the spaces between the partition members 2a. The partition members 2a are each formed in a sheet processed to be flat. The partition members 2a and the spacer members 2b are alternately stacked. An air passage is formed between partition members 2a adjacent to each other. In the heat exchanging element 2, air passages through which air from outside the room flows and air passages through which air from inside the room flows are alternately arranged. The heat exchanging element 2 is a countercurrent heat exchanging element in which the direction of air-flow from outside the room and the direction of air-flow from inside the room are opposite each other in the present embodiment. However, the heat exchanging element 2 may be a crossflow heat exchanging element in which the direction of air-flow from outside the room and the direction air-flow from inside the room are perpendicular to each other.

A stacking direction, which is the direction in which the partition members 2a and the spacer members 2b are stacked, coincides with the front-back direction, which is the direction perpendicular to the front plate 1c and the back plate 1d, in the present embodiment. Alternatively, the stacking direction may coincide with the up-down direction, which is perpendicular to the top plate 1a and the bottom plate 1b, or may coincide with the left-right direction, which is perpendicular to the left side plate 1e and the right side plate 1f. The heat exchanging element 2 may be enabled to perform both sensible heat exchange and latent heat exchange by appropriately changing the materials of the partition members 2a, or may be enabled to perform either one of sensible heat exchange and latent heat exchange.

As illustrated in FIG. 10, the supply fan 3 is a fan located in the supply air passage 23. The supply fan 3 takes air into the supply air passage 23 through the outside inlet 8, and sends air into the room through the inside outlet 10. The supply fan 3 is located downstream of the heat exchanging element 2, the outside air filter 5, and the supply filter 7.

The exhaust fan 4 is a fan located in the exhaust air passage 24. The exhaust fan 4 takes air into the exhaust air passage 24 through the inside inlet 9, and sends air to outside the room through the outside outlet 11. The exhaust fan 4 is located downstream of the exhaust filter 6 and the heat exchanging element 2.

The outside air filter 5 is a member that is located in the supply air passage 23 and collects dust contained in air from outside the room. The outside air filter 5 is located downstream of the outside inlet 8 and upstream of the heat exchanging element 2. The outside air filter 5 is located at an outside air inlet of the heat exchanging element 2. Collection of dust by the outside air filter 5 suppresses clogging of the heat exchanging element 2 due to adhesion of dust. The outside air filter 5 is located on the right of the center of the housing 1 in the left-right direction.

The supply filter 7 is a member that is located in the supply air passage 23 and collects dust contained in air from outside the room. The supply filter 7 is located downstream of the heat exchanging element 2 and upstream of the inside outlet 10. The supply filter 7 is located at an outside air outlet of the heat exchanging element 2. Provision of two filters, which are the outside air filter 5 and the supply filter 7, in the supply air passage 23 makes air from outside the room cleaner. The supply filter 7 is located on the left of the center of the housing 1 in the left-right direction.

The exhaust filter 6 is a member that is located in the exhaust air passage 24 and collects dust contained in air from inside the room. The exhaust filter 6 is located downstream of the inside inlet 9 and upstream of the heat exchanging element 2. The exhaust filter 6 is located at an inside air inlet of the heat exchanging element 2. The exhaust filter 6 is located on the left of the center of the housing 1 in the left-right direction.

The drain pan 12 is a member that is located below the heat exchanging element 2 in the housing 1 and stores drainage water produced in the housing 1. The drain pan 12 is located on the bottom plate 1b.

The drain hole 13 is a member for discharging drainage water stored in the drain pan 12 to outside the housing 1. The drain hole 13 is formed in a cylindrical shape extending in the up-down direction. The drain hole 13 extends through the bottom plate 1b and the drain pan 12. A lower end of the drain hole 13 is projected downward from the bottom plate 1b. An upper end of the drain hole 13 is at a position at the same height as a bottom face of the drain pan 12. In the present embodiment, the drain hole 13 is formed integrally with the drain pan 12.

The control board 15 is located in the space 29 below the heat exchanging element 2. The control board 15 is electrically connected with the operation unit 14 illustrated in FIG. 1 by a cable, which is not illustrated. As illustrated in FIG. 1, the control board 15 includes a first board 15a and a second board 15b. The first board 15a is a board connected with a power supply, which is not illustrated. The first board 15a is contained in a first board case 15c having a box shape and opening downward. The second board 15b is a board including a connection part to which a sensor, which is not illustrated, is connected, a control setting unit, and the like. The sensor connected to the second board 15b is a humidity sensor or a CO₂ sensor, for example. The second board 15b is attached to a second board case 15d.

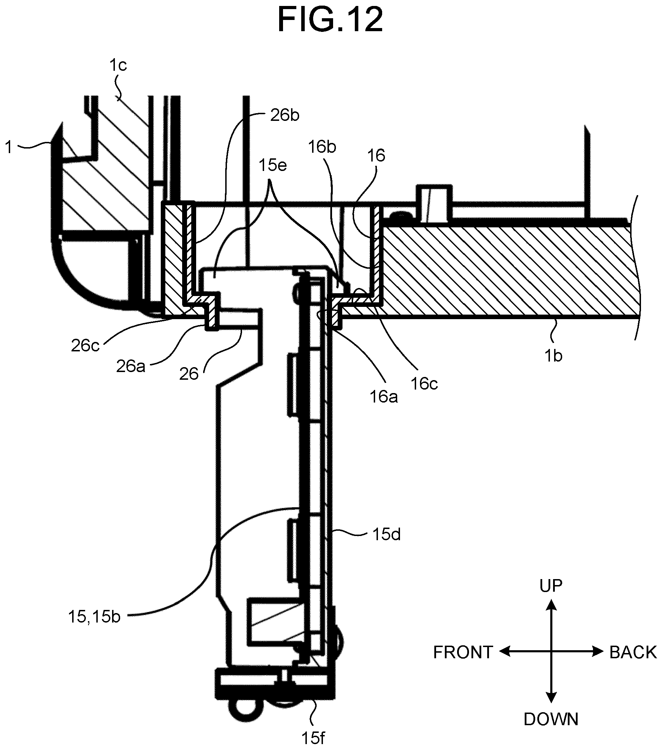

FIG. 12 is a cross-sectional view along line XII-XII illustrated in FIG. 6. A rib 15e projecting frontward or backward is formed on an upper end of the second board case 15d. A board cover 15f is attached to a lower end of the second board case 15d. The board cover 15f covers the board opening 16 when the second board case 15d and the second board 15b are inserted in the housing 1.

The bottom plate 1b has the board opening 16 through which the second board 15b can be drawn out of the housing 1. The second board case 15d and the second board 15b can be drawn downward from the inside of the housing 1 through the board opening 16, so that the second board 15b can be exposed out of the housing 1. An inner wall of the board opening 16 includes a first wall 16a, a second wall 16b, and a connecting wall 16c. The first wall 16a and the second wall 16b are both formed in a quadrangle cylinder shape. The second wall 16b is located above the first wall 16a. The second wall 16b has an opening area larger than that of the first wall 16a. The connecting wall 16c is a flat part connecting an upper end of the first wall 16a with a lower end of the second wall 16b.

A positioning frame 26 is fitted into the board opening 16. The positioning frame 26 includes a first frame 26a, a second frame 26b, and a contact part 26c. The first frame 26a is a part having a quadrangle frame shape to be fitted into the first wall 16a. The second frame 26b is a part having a quadrangle frame shape to be fitted into the second wall 16b. The second frame 26b has an opening area larger than that of the first frame 26a. The contact part 26c is a flat part connecting an upper end of the first frame 26a and a lower end of the second frame 26b. The contact part 26c is located above the connecting wall 16c. The contact part 26c is in contact with the rib 15e in a state in which the second board 15b is drawn out of the housing 1. The contact between the rib 15e and the contact part 26c holds the second board case 15d drawn out of the housing 1 and the second board 15b in a stationary state. The rib 15e and the contact part 26c constitute a holder that holds the control board 15 drawn out of the housing 1 in a stationary state.

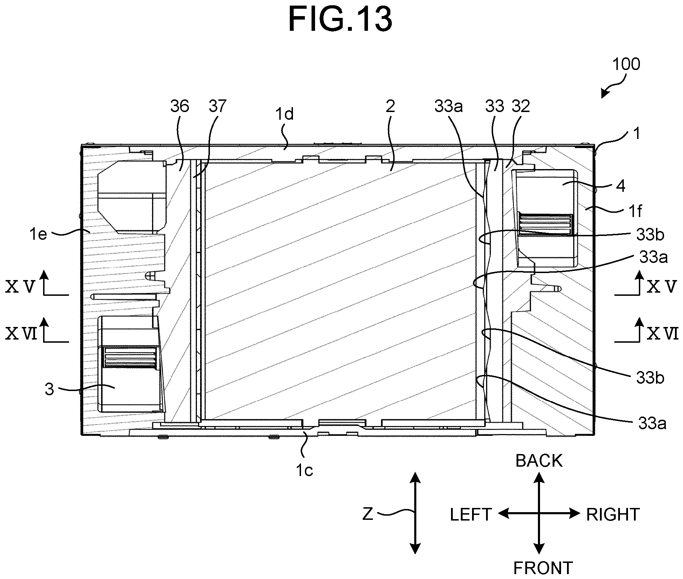

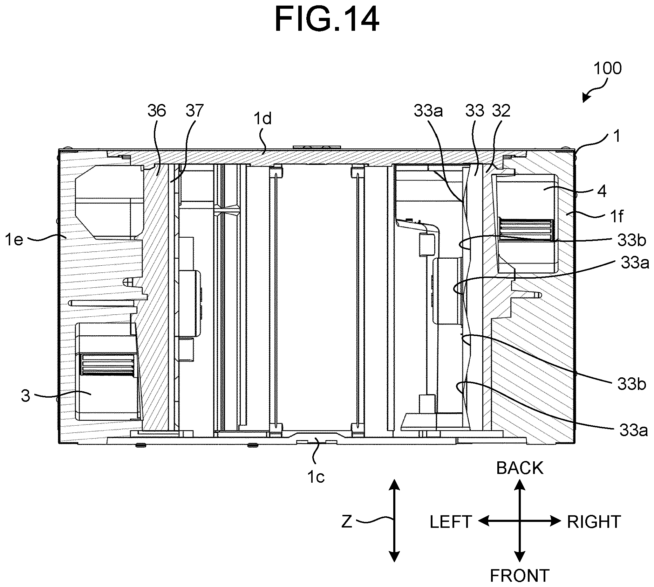

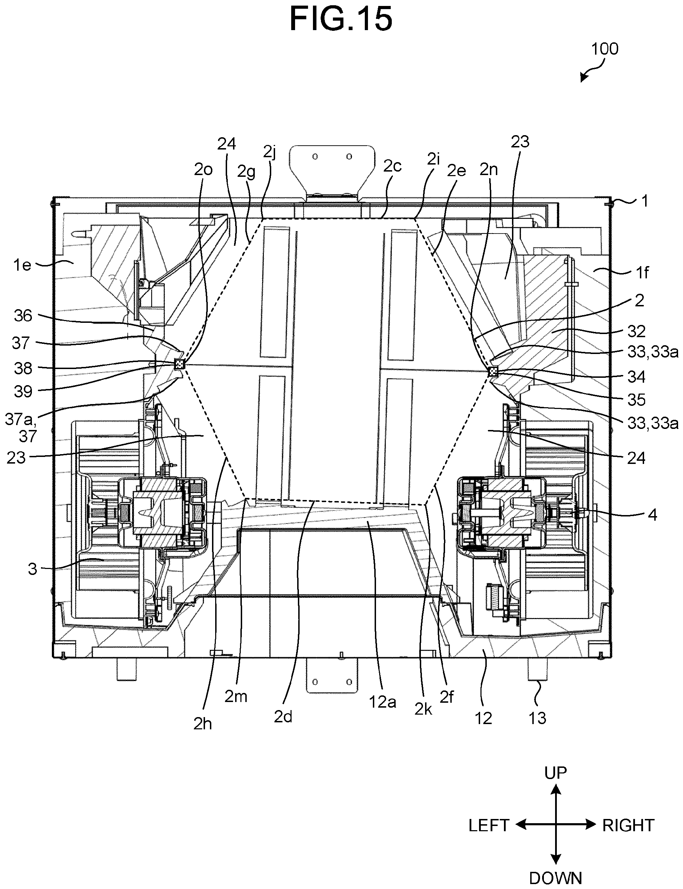

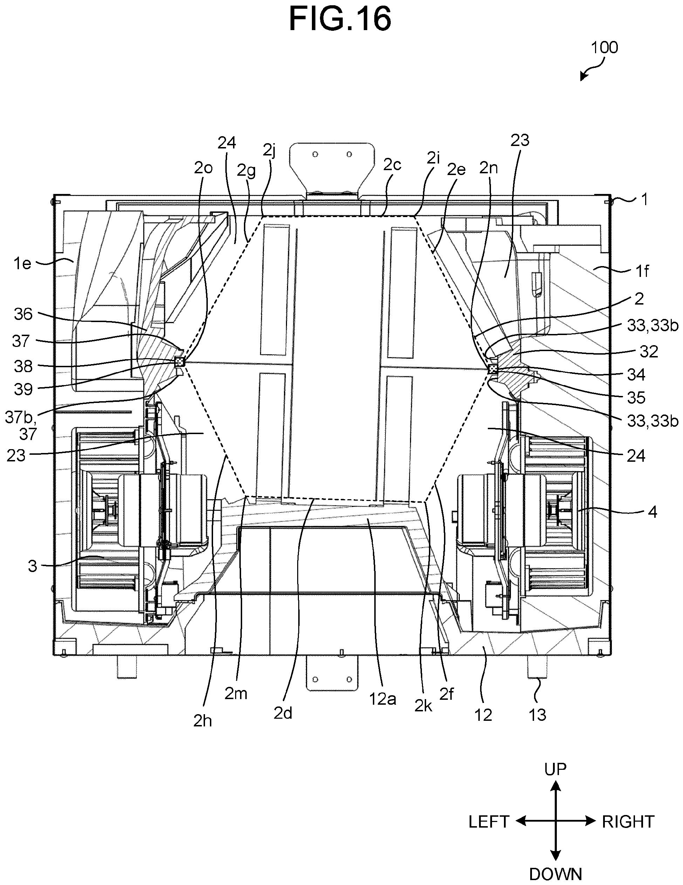

A structure for holding the heat exchanging element 2 in the housing 1 will now be described. FIG. 13 is a cross-sectional view along line XIII-XIII illustrated in FIG. 7. FIG. 14 is a cross-sectional view illustrating a state in which the heat exchanging element 2 is removed from the housing 1 illustrated in FIG. 13. FIG. 15 is a cross-sectional view along line XV-XV illustrated in FIG. 13. FIG. 16 is a cross-sectional view along line XVI-XVI illustrated in FIG. 13. Note that, in FIGS. 15 and 16, for convenience of explanation, the heat exchanging element 2 is illustrated by dashed lines and the top plate 1a is not illustrated. For convenience of explanation, FIG. 15 illustrates a state in which a first packing 35 is not pressed. For convenience of explanation, FIG. 16 illustrates a state in which a second packing 39 is not pressed.

As illustrated in FIGS. 15 and 16, the heat exchanging element 2 is disposed to be horizontally insertable in the housing 1 in the front-back direction and removable from the housing 1. Specifically, the front plate 1c can be removed from the housing 1, so that the heat exchanging element 2 can be horizontally inserted into the housing 1 and that the heat exchanging element 2 can be horizontally removed from the housing 1. Hereinafter, the inserting direction and the removing direction of the heat exchanging element 2 will be collectively referred to as the inserting and removing direction Z. The heat exchanging element 2 having a polygonal prism shape has six faces 2c, 2d, 2e, 2f, 2g, and 2h and six corners 2i, 2j, 2k, 2m, 2n, and 2o. The heat exchanging element 2 is disposed in the housing 1 with the face 2c, which connects the corner 2i with the corner 2j, facing upward; and the face 2d, which connects the corner 2k with the corner 2m, facing downward. The face 2c comes in contact with an inner face of the top plate 1a. The face 2d is in contact with an upper face of the base 12a. The heat exchanging element 2 is held between the top plate 1a and the base 12a. A diagonal line connecting the corner 2n with the corner 2o is perpendicular to the up-down direction. The corner 2n faces the right side plate 1f. The corner 2o faces the left side plate 1e.

In the housing 1, a first member 32 and a second member 36 are disposed. The first member 32 and the second member 36 are disposed at symmetrical positions with the heat exchanging element 2 therebetween. The first member 32 is located on an inner face of the right side plate 1f and above the exhaust fan 4. The second member 36 is located on an inner face of the left side plate 1e and above the supply fan 3.

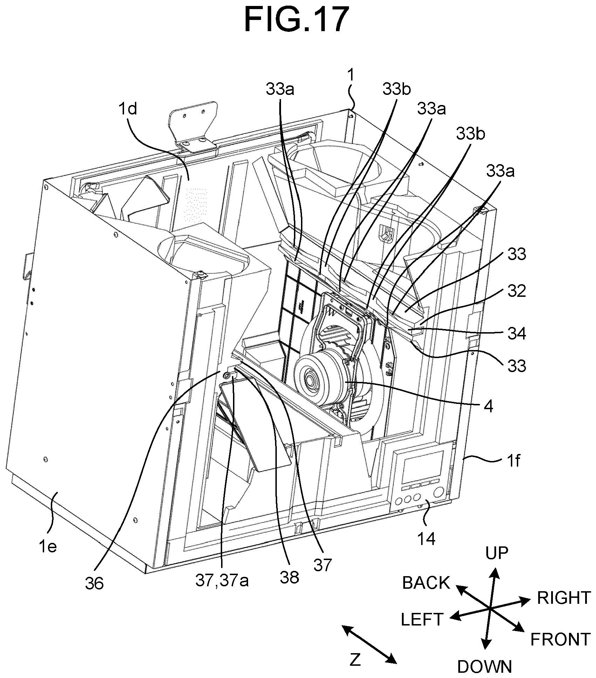

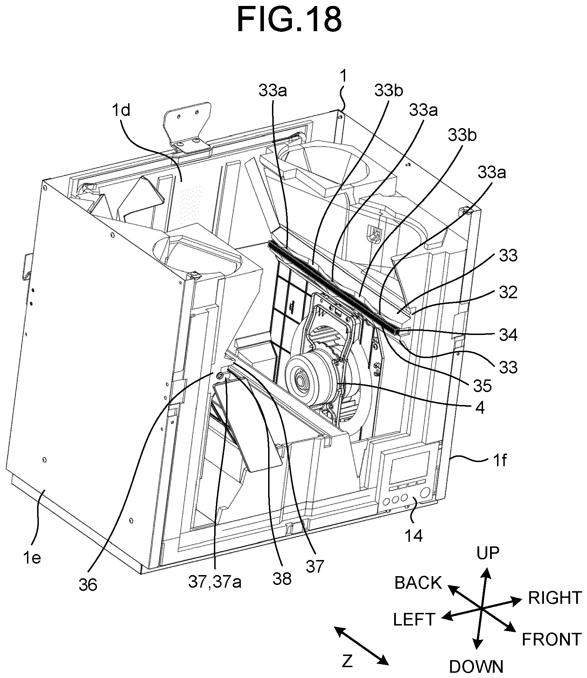

First holders 33 for holding the heat exchanging element 2 and a first sealing surface 34 on which the first packing 35 is disposed are formed on a face of the first member 32 facing the heat exchanging element 2. One of the first holders 33 is disposed on the upper side of the first packing 35, and the other is disposed on the lower side of the first packing 35. FIG. 17 is a perspective view illustrating the heat exchange ventilator 100 according to the first embodiment in a state in which the top plate 1a, the front plate 1c, the heat exchanging element 2, and the filters 5, 6, and 7 are removed. FIG. 18 is a perspective view illustrating a state in which the first packing 35 is disposed in the heat exchange ventilator 100 illustrated in FIG. 17. Each of the first holders 33 includes, along the inserting and removing direction Z of the heat exchanging element 2, first convex portions 33a that can come into contact with the heat exchanging element 2, and first concave portions 33b that are away from the heat exchanging element 2 in a state in which the first convex portions 33a are in contact with the heat exchanging element 2.

The first convex portions 33a and the first concave portions 33b are alternately and repeatedly formed along the inserting and removing direction Z. The first convex portions 33a are formed in an arch shape projecting toward the heat exchanging element 2. The projecting ends of the first convex portions 33a are at positions on the inner side of the housing 1 relative to the first sealing surface 34. The first convex portions 33a come in contact with the heat exchanging element 2 in a state in which the first packing 35 is pressed. The first concave portions 33b are formed in an arch shape that is concave in a direction opposite to the heat exchanging element 2. The first concave portions 33b serve to reduce the contact area of the heat exchanging element 2 and the first holders 33, and also serve to allow drainage water produced above the first holders 33 in the housing 1 to go downward. As illustrated in FIG. 18, on one of the first holders 33 and the other of the first holders 33 arranged with the first packing 35 therebetween, the first convex portions 33a are disposed at symmetrical positions, and the first concave portions 33b are disposed at symmetrical positions. Specifically, the first convex portions 33a of the first holders 33 arranged with the first packing 35 therebetween as illustrated in FIG. 18 are at corresponding positions in the up-down direction. In addition, the first concave portions 33b of the first holders 33 arranged with the first packing 35 therebetween are at corresponding positions in the up-down direction.

The first packing 35 illustrated in FIG. 15 is an airtight packing that allows passage of fluid but does not allow passage of gas. The first packing 35 is arranged adjacent to the first holders 33 in the up-down direction. The first packing 35 is in contact with the corner 2n of the heat exchanging element 2. In a state in which the first packing 35 is not in contact with the heat exchanging element 2, an end of the first packing 35 is at a position on the inner side of the housing 1 relative to the first convex portions 33a. As illustrated in FIGS. 15 and 16, the first sealing surface 34 is a flat face over the entire length in the inserting and removing direction Z.

Second holders 37 for holding the heat exchanging element 2 and a second sealing surface 38 on which the second packing 39 is disposed are formed on a face of the second member 36 facing the heat exchanging element 2. One of the second holders 37 is on the upper side of the second packing 39, and the other is on the lower side of the second packing 39. The second holder 37 located on the upper side of the second packing 39 has a uniform shape over the entire length in the inserting and removing direction Z. An end of the second holder 37 located on the upper side is at a position on the inner side of the housing 1 relative to the second sealing surface 38.

The second holder 37 located on the lower side of the second packing 39 includes, along the inserting and removing direction Z of the heat exchanging element 2: second convex portions 37a that can come into contact with the heat exchanging element 2; and second concave portions 37b that are away from the heat exchanging element 2 in a state in which the second convex portions 37a are in contact with the heat exchanging element 2. The second convex portions 37a and the second concave portions 37b are alternately and repeatedly formed along the inserting and removing direction Z. The second convex portions 37a are formed in an arch shape projecting toward the heat exchanging element 2. The projecting ends of the second convex portions 37a are at positions on the inner side of the housing 1 relative to the second sealing surface 38. The second convex portions 37a come in contact with the heat exchanging element 2 in a state in which the second packing 39 is pressed. The second concave portions 37b are formed in an arch shape that is concave in a direction opposite to the heat exchanging element 2. The second concave portions 37b serve to reduce the contact area of the heat exchanging element 2 and the second holders 37, and also serve to allow drainage water produced above the second holders 37 in the housing 1 to go downward.

The second packing 39 illustrated in FIG. 15 is an airtight packing that allows passage of fluid but does not allow passage of gas. The second packing 39 is arranged adjacent to the second holders 37 in the up-down direction. The second packing 39 is in contact with the corner 2o of the heat exchanging element 2. In a state in which the second packing 39 is not in contact with the heat exchanging element 2, an end of the second packing 39 is at a position on the inner side of the housing 1 relative to the second convex portions 37a. The end of the second packing 39 is at a position on the inner side of the housing 1 relative to the ends of the second holders 37 on the upper side thereof. As illustrated in FIGS. 15 and 16, the second sealing surface 38 is a flat face over the entire length in the inserting and removing direction Z.

The first holders 33 and the second holders 37 are arranged with the heat exchanging element 2 therebetween in the housing 1. The heat exchanging element 2 is held between the first holders 33 and the second holders 37. In one of the first holders 33 and the other of the second holders 37, which are arranged with the heat exchanging element 2 therebetween, the first convex portions 33a and the second convex portions 37a are at symmetrical positions with respect to the heat exchanging element 2; and the first concave portions 33b and the second concave portions 37b are at symmetrical positions with respect to the heat exchanging element 2. Specifically, the first convex portions 33a and the second convex portions 37a are at corresponding positions in the horizontal direction with respect to a plane connecting the corner 2n and the corner 2o of the heat exchanging element 2. The first concave portions 33b and the second concave portions 37b are at corresponding positions in the horizontal direction with respect to the plane connecting the corner 2n and the corner 2o of the heat exchanging element 2.

Next, effects of the heat exchange ventilator 100 will be explained.

In the present embodiment, the heat exchange ventilator 100 includes the first holders 33 and the second holders 37 located on both sides of the heat exchanging element 2 in the housing 1 to hold the heat exchanging element 2. The first holders 33 include, along the inserting and removing direction Z of the heat exchanging element 2: the first convex portions 33a that can come into contact with the heat exchanging element 2; and the first concave portions 33b that are away from the heat exchanging element 2 in a state in which the first convex portions 33a are in contact with the heat exchanging element 2. A second holder 37 includes, along the inserting and removing direction Z of the heat exchanging element 2, the second convex portions 37a that can come into contact with the heat exchanging element 2, and the second concave portions 37b that are away from the heat exchanging element 2 in a state in which the second convex portions 37a are in contact with the heat exchanging element 2. Thus, when the heat exchanging element 2 is inserted and removed, the heat exchanging element 2 comes in contact with the first convex portions 33a and the second convex portions 37a, but the heat exchanging element 2 does not come in contact with the first concave portions 33b and the second concave portions 37b. As a result, as compared with a case where the contact faces of the holders have a uniform shape over the entire length in the inserting and removing direction Z, the contact area of the heat exchanging element 2 and the first holders 33 and the contact area of the heat exchanging element 2 and the second holders 37 can be reduced, and the contact resistance of the heat exchanging element 2 when the heat exchanging element 2 is inserted and removed thus becomes smaller. This improves the work efficiency when the heat exchanging element 2 is inserted and removed.

In the present embodiment, the first convex portions 33a and the first concave portions 33b are alternately and repeatedly formed along the inserting and removing direction Z. In addition, the second convex portions 37a and the second concave portions 37b are alternately and repeatedly formed along the inserting and removing direction Z. As a result, even the first concave portions 33b and the second concave portions 37b that do not come in contact with the heat exchanging element 2 are provided, the heat exchanging element 2 can be held in a balanced manner without being inclined relative to the inserting and removing direction Z.

In the present embodiment, the first convex portions 33a and the second convex portions 37a are formed in an arch shape projecting toward the heat exchanging element 2. Thus, the contact area of the heat exchanging element 2 and the first convex portions 33a and the contact area of the heat exchanging element 2 and the second convex portions 37a can be reduced, and the fundamental strength of the first convex portions 33a and the second convex portions 37a can also be secured. This further improves the work efficiency when the heat exchanging element 2 is inserted and removed.

In the present embodiment, the first concave portions 33b are formed in an arch shape that is concave in a direction opposite to the heat exchanging element 2. Thus, the arch shapes of the first convex portions 33a and the first concave portions 33b facilitate processing of the first convex portions 33a and the first concave portions 33b. In addition, the second concave portions 37b are formed in an arch shape that is concave in a direction opposite to the heat exchanging element 2. Thus, the arch shapes of the second convex portions 37a and the second concave portions 37b facilitate processing of the second convex portions 37a and the second concave portions 37b.

In the present embodiment, the heat exchange ventilator 100 includes: the first packing 35 that is arranged adjacent to the first holders 33 in the up-down direction and comes in contact with the heat exchanging element 2; and the second packing 39 that is arranged adjacent to the second holders 37 in the up-down direction and comes in contact with the heat exchanging element 2. Thus, the first packing 35 and the second packing 39 can keep airtightness between the supply air passage 23 and the exhaust air passage 24.

In the present embodiment, because the first packing 35 is an airtight packing that allows passage of fluid but does not allow passage of gas, drainage water produced above the first holders 33 in the housing 1 flows downward toward the drain pan 12 through the upper first concave portion 33b, the first packing 35, and the lower first concave portion 33b. This can suppress drainage water from stagnating on the first holders 33.

In the present embodiment, the first concave portions 33b of the first holder 33 located on the upper side of the first packing 35 and the first concave portions 33b of the first holder 33 located on the lower side thereof are disposed at corresponding positions in the up-down direction. Thus, drainage water that has passed through the upper first concave portions 33b easily passes through the lower first concave portions 33b, which makes drainage water flow smoothly.

In the present embodiment, the second holder 37 located on the upper side of the second packing 39 is formed to have a uniform shape over the entire length in the inserting and removing direction Z, and the second holder 37 located on the lower side of the second packing 39 includes the second convex portions 37a and the second concave portions 37b. In addition, the second packing 39 is an airtight packing that allows passage of fluid but does not allow passage of gas. Thus, even when drainage water stagnating on the second holder 37 located on the upper side drips through a minute gap or the like between the second holder 37 and the heat exchanging element 2, the drainage water flows downward toward the drain pan 12 through the second packing 39 and the second concave portions 37b. This can suppress drainage water from stagnating between the second holder 37 located on the upper side and the second holder 37 located on the lower side.

In the present embodiment, the first sealing surface 34 on which the first packing 35 is disposed has a flat face over the entire length in the inserting and removing direction Z; and the second sealing surface 38 on which the second packing 39 is disposed has a flat face over the entire length in the inserting and removing direction Z. This enables the first packing 35 and the second packing 39 to come uniformly in contact with the heat exchanging element 2 over the entire length in the inserting and removing direction Z. As a result, the airtightness between the supply air passage 23 and the exhaust air passage 24 can further be secured.

In the present embodiment, the first holders 33 are arranged on the upper side and on the lower side of the first packing 35. Thus, even when the heat exchanging element 2 is shifted toward one side in the up-down direction, the first convex portions 33a of either one of the upper and lower first holders 33 can reliably come into contact with the heat exchanging element 2. In addition, the second holders 37 are arranged on the upper side and on the lower side of the second packing 39. Thus, even when the heat exchanging element 2 is shifted toward one side in the up-down direction, either one of the upper and lower second holders 37 can reliably come into contact with the heat exchanging element 2.

In the present embodiment, an end of the first packing 35 is disposed at a position on the inner side of the housing 1 relative to the first convex portions 33a; and an end of the second packing 39 is disposed at a position on the inner side of the housing 1 relative to the second convex portions 37a. Thus, when the heat exchanging element 2 is inserted into the housing 1, the first packing 35 comes in contact with the heat exchanging element 2 before the first convex portions 33a come in contact with the heat exchanging element 2; and the second packing 39 comes into contact with the heat exchanging element 2 before the second convex portions 37a come in contact with the heat exchanging element 2. As a result, the first packing 35 and the second packing 39 can be securely pressed, to reliably block between the first member 32 and the heat exchanging element 2 and between the second member 36 and the heat exchanging element 2. In the meantime, as the first packing 35 is pressed, the heat exchanging element 2 and the first convex portions 33a come into contact with each other; and as the second packing 39 is pressed, the heat exchanging element 2 and the second convex portions 37a come into contact with each other. The contact between the heat exchanging element 2 and the first convex portions 33a can suppress excessive deformation of the first packing 35; and the contact between the heat exchanging element 2 and the second convex portions 37a can suppress excessive deformation of the second packing 39.

Note that, while the heat exchange ventilator 100 is installed near the ceiling surface 31 on the wall surface 30 of the building in the present embodiment, this is not intended to limit the installation positions of the heat exchange ventilator 100. For example, the heat exchange ventilator 100 may be installed near the floor surface on the wall surface 30 of the building. In addition, the positions of the outside inlet 8, the inside inlet 9, the inside outlet 10, and the outside outlet 11 on the top plate 1a of the housing 1 are not limited to the illustrated positions.

While the convex portions and the concave portions are formed on both of the first holders 33 and the second holders 37 arranged with the heat exchanging element 2 therebetween in the present embodiment, convex portions and concave portions may be formed on at least one of the first holders 33 and the second holders 37.

While the first convex portions 33a and the first concave portions 33b are formed on both of the first holders 33 arranged on the upper side and the lower side of the first packing 35 in the present embodiment, the first convex portions 33a and the first concave portions 33b may be formed on at least one of the first holders 33 arranged on the upper side and the lower side of the first packing 35, and the other first holder 33 may have a uniform shape over the entire length in the inserting and removing direction Z.

While the second holder 37 arranged on the upper side of the second packing 39 has a uniform shape over the entire length in the inserting and removing direction Z and the second convex portions 37a and the second concave portions 37b are formed on the second holder 37 arranged on the lower side of the second packing 39 in the present embodiment, this is not intended to limit the structures of the second holders 37The second convex portions 37a and the second concave portions 37b may be formed on both of the second holders 37 arranged on the upper side and the lower side of the second packing 39; or the second convex portions 37a and the second concave portions 37b may be formed on the second holder 37 arranged on the upper side of the second packing 39; and the second holder 37 arranged on the lower side of the second packing 39 may have a uniform shape over the entire length in the inserting and removing direction Z. In a case where the first holder 33 and the second holder 37 arranged on the upper side may have a uniform shape over the entire length in the inserting and removing direction Z, so that the entire faces of the first holder 33 and the second holder 37 come into contact with the heat exchanging element 2, the first packing 35 and the second packing 39 may be omitted.

Alternatively, the first convex portions 33a and the first concave portions 33b may be formed on all the first holders 33; the second convex portions 37a and the second concave portions 37b may be formed on all the second holders 37; and the first holders 33 and the second holders 37 may have symmetrical shapes with respect to the heat exchanging element 2. As a result, components having the same shape can be used for the first member 32 and the second member 36, which can reduce the number of components and reduce manufacture cost.

While a plurality of first convex portions 33a and a plurality of first concave portions 33b are alternately and repeatedly formed in the present embodiment, at least one first convex portion 33a and at least one first concave portion 33b may be formed, and the first convex portions 33a and the first concave portions 33b may have shapes different from each other. In addition, while a plurality of second convex portions 37a and a plurality of second concave portions 37b are alternately and repeatedly formed in the present embodiment, at least one second convex portion 37a and at least one second concave portion 37b may be formed, and the second convex portions 37a and the second concave portions 37b may have shapes different from each other.

In the present embodiment, while the first convex portions 33a and the second convex portions 37a have arch shapes projecting toward the heat exchanging element 2, this is not intended to limit the shapes of the first convex portions 33a and the second convex portions 37a. For example, the first convex portions 33a and the second convex portions 37a may have a triangular or quadrangular shape projecting toward the heat exchanging element 2. In addition, while the first concave portions 33b and the second concave portions 37b have arch shapes that are concave in directions opposite to the heat exchanging element 2, this is not to limit the shapes of the first concave portions 33b and the second concave portions 37b. For example, the first concave portions 33b and the second concave portions 37b may have a triangular or quadrangular shape that is recessed in a direction opposite to the heat exchanging element 2. In addition, while the first convex portions 33a and the first concave portions 33b have the same arch shape as each other and the second convex portions 37a and the second concave portions 37b have the same arch shape as each other in the present embodiment, the shapes may be different from each other. For example, the first convex portions 33a and the second convex portions 37a may have an arch shape projecting toward the heat exchanging element 2, and the first concave portions 33b and the second concave portions 37b may have a triangular shape that is recessed in a direction opposite to the heat exchanging element 2.

While the first convex portions 33a of the first holders 33 arranged on the upper side and the lower side of the first packing 35 are disposed at corresponding positions in the up-down direction in the present embodiment, the first convex portions 33a may be disposed at shifted positions in the up-down direction. In addition, while the first concave portions 33b of the first holders 33 arranged on the upper side and the lower side of the first packing 35 are disposed at corresponding positions in the up-down direction in the present embodiment, the first concave portions 33b may be disposed at shifted positions in the up-down direction.

While one first holder 33 is arranged on each of the upper side and the lower side of the first packing 35 in the present embodiment, two or more first holders 33 may be arranged on each of the upper side and the lower side of the first packing 35. In addition, the numbers of first holders 33 arranged on the upper side and the lower side of the first packing 35 may be the same number or different numbers.

While one second holder 37 is arranged on each of the upper side and the lower side of the second packing 39 in the present embodiment, two or more second holders 37 may be arranged on each of the upper side and the lower side of the second packing 39. In addition, the numbers of second holders 37 arranged on the upper side and the lower side of the second packing 39 may be the same number or different numbers.

While the first holders 33 are arranged on the first member 32 formed separately from the right side plate 1f in the present embodiment, the right side plate 1f and the first member 32 may be formed integrally, and the first holders 33 may be directly arranged on the right side plate 1f. In addition, while the second holders 37 are arranged on the second member 36 formed separately from the left side plate 1e in the present embodiment, the left side plate 1e and the second member 36 may be formed integrally, and the second holders 37 may be directly arranged on the left side plate 1e.

While the first packing 35 is disposed on the first sealing surface 34 and the second packing 39 is disposed on the second sealing surface 38 in the present embodiment, the first packing 35 and the second packing 39 may be disposed on the heat exchanging element 2.

The configurations presented in the embodiment above are examples of the present invention, and can be combined with other known technologies or can be partly omitted or modified without departing from the scope of the present invention.

### Reference Signs List

1 housing; 1a top plate; 1b bottom plate; 1c front plate; 1d back plate; 1e left side plate; 1f right side plate; 2 heat exchanging element; 2a partition member; 2b spacer member; 2c, 2d, 2e, 2f, 2g, 2h face; 2i, 2j, 2k, 2m, 2n, 2o corner; 3 supply fan; 4 exhaust fan; 5 outside air filter; 6 exhaust filter; 7 supply filter; 8 outside inlet; 9 inside inlet; 10 inside outlet; 11 outside outlet; 12 drain pan; 12a base; 13 drain hole; 14 operation unit; 15 control board; 15a first board; 15b second board; 15c first board case; 15d second board case; 15e rib; 15f board cover; 16 board opening; 16a first wall; 16b second wall; 16c connecting wall; 17 outside air filter opening; 18 exhaust filter opening; 19 supply filter opening; 20 outside air filter cover; 21 exhaust filter cover; 22 supply filter cover; 23 supply air passage; 24 exhaust air passage; 25 heat insulating component; 26 positioning frame; 26a first frame; 26b second frame; 26c contact part; 27a, 27b, 27c, 27d duct; 28 design material; 29 space; 30 wall surface; 31 ceiling surface; 32 first member; 33 first holder; 33a first convex portion; 33b first concave portion; 34 first sealing surface; 35 first packing; 36 second member; 37 second holder; 37a second convex portion; 37b second concave portion; 38 second sealing surface; 39 second packing; 100 heat exchange ventilator; C center line; Z inserting and removing direction.

## Claims

1. A heat exchange ventilator comprising:
a housing having a box shape, in which a supply air passage for supplying air from outside a room into the room and an exhaust air passage for exhausting air from inside the room to outside thereof are formed;
a supply fan disposed in the supply air passage;
an exhaust fan disposed in the exhaust air passage;
a heat exchanging element insertably and removably disposed in the housing, the heat exchanging element exchanging heat between air flowing in the supply air passage and air flowing in the exhaust air passage; and
holders arranged on both sides of the heat exchanging element in the housing, the holders holding the heat exchanging element, wherein
on at least one of the holders arranged with the heat exchanging element therebetween, along an inserting and removing direction of the heat exchanging element, convex portions capable of coming in contact with the heat exchanging element, and concave portions being away from the heat exchanging element in a state in which the convex portions are in contact with the heat exchanging element, are formed.

2. The heat exchange ventilator according to claim 1, wherein the convex portions and the concave portions are alternately and repeatedly arranged along the inserting and removing direction.

3. The heat exchange ventilator according to claim 1 or 2, wherein the convex portions ae formed in an arch shape projecting toward the heat exchanging element.

4. The heat exchange ventilator according to claim 3, wherein the concave portions are formed in an arch shape being concave in a direction opposite to the heat exchanging element.

5. The heat exchange ventilator according to any one of claims 1 to 4, wherein
the convex portions and the concave portions are formed on one of the holders and the other of the holders arranged with the heat exchanging element therebetween, and
the one of the holders and the other of the holders have symmetrical shapes with respect to the heat exchanging element.

6. The heat exchange ventilator according to any one of claims 1 to 5, wherein
the holders are arranged in a direction perpendicular to an up-down direction with the heat exchanging element therebetween, and
the heat exchange ventilator further comprises a packing arranged adjacent to the holders in the up-down direction to come into contact with the heat exchanging element.

7. The heat exchange ventilator according to claim 6, wherein a sealing surface on which the packing is disposed is a flat face over an entire length in the inserting and removing direction.

8. The heat exchange ventilator according to claim 6 or 7, wherein the holders are arranged on an upper side and a lower side of the packing.
